# EUROPEAN PATENT SPECIFICATION

(11) **EP 2 111 100 B1**
(45) Date of publication and mention of the grant of the patent: **22.09.2010**
(21) Application number: 08705112.4
(22) Date of filing: 25.01.2008
(51) Int. Cl.: A01K 1/12, A01K 11/00, A01K 29/00, G06K 7/00

(54) **SYSTEM FOR DETECTING AN ANIMAL PASSING A DEFINED AREA IN OR OPPOSITE TO A WALK-THROUGH DIRECTION OF THE AREA**
SYSTEM ZUR ERFASSUNG EINES TIERES, DAS EIN DEFINIERTES GEBIET IN ODER ENTGEGENGESETZT EINER DURCHGANGSRICHTUNG DES GEBIETS PASSIERT
SYSTÈME POUR DÉTECTER UN ANIMAL PASSANT PAR UNE ZONE DÉFINIE DANS OU OPPOSÉE À UNE DIRECTION DE CHEMINEMENT DE LA ZONE

(30) Priority: 26.01.2007 NL 1033292
(43) Date of publication of application: 28.10.2009
(73) Proprietor: N.V. Nederlandsche Apparatenfabriek NEDAP, 7141 DC Groenlo (NL)
(72) Inventor: VERSTEGE, Albertino, Bernardo, Maria, NL-7121 HM Aalten (NL); SCHREURS, Bernard, Jan, Gerrit, NL-7126 CR Bredevoort (NL); ZENTS, Otto, Theodorus, Jozef, NL-7131 ES Lichtenvoorde (NL)
(74) Representative: Hatzmann, Martin
(86) International application number: PCT/NL2008/050043
(87) International publication number: WO 2008/091150

(56) References cited:
- WO-A-99/01026
- WO-A-03/039247
- WO-A-2004/049790
- US-A- 4 798 175

## Description

The invention relates to a system for detecting an animal having passed a defined area in or opposite to a walk-through direction of the area.

The invention also relates to a milking parlour for milking animals, provided with a pathway with an entrance and a number of milking places the animals can enter via the pathway.

Such a system and such a milking parlour are known per se, see e.g. US-A-4798175 and WO-A-049790.

Such a known system for detecting an animal passing a defined area in or opposite to a walk-through direction of the area may be provided with a light source for producing a light beam through the area and a sensor for detecting a light beam crossing the area. When an animal passes the area in or opposite to a walk-through direction of the area, the light beam is interrupted which can be detected by the known system.

The invention contemplates providing an alternative system which offers possibilities for improving the known system.

Accordingly, the system according to the invention is **characterized in that** the system is provided with at least one sensor which is designed for obtaining information, by means of a measurement with the sensor, about a distance between the sensor and an exterior of an animal present in the area, and a signal processing unit which is connected to the at least one sensor and which is designed for determining, at least on the basis of the course over time of the information obtained with the at least one sensor about a distance when an animal moves in the area, whether an animal has passed the area. When an animal passes the area in or opposite to the walk-through direction, the detector will detect varying information about a distance between animal and sensor. It may happen, for instance, that first the head of the animal is measured, whereupon the body of the animal is measured. As a result, the distance to the animal will decrease in the course of time. When the animal walks on, the distance to the animal will increase again. From the measured information about the distance between animal and sensor, a signal processing unit can detect that an animal has passed the area. According to the invention, to this end, the signal processing unit can function in different manners. The signal processing unit can, for instance, determine that an animal has passed the respective area when a measured distance drops below a defined minimum. When, for instance, the distance from the sensor to the body of the animal is measured, as a rule, the distance will have reached its minimum value and this minimum value will then be below the predefined value which, in turn, means that the animal has passed the area. However, other criteria are possible too.

It holds in particular that the system is provided with at least two sensors which are each designed for obtaining information, by means of a measurement, about a distance between the respective sensor and an exterior of an animal present in the area, wherein the sensors are arranged at mutually different positions and wherein the signal processing unit is designed for combined processing of the courses over time of the information, obtained per sensor, about a distance when an animal moves in the area, for determining whether an animal has passed the area.

Thus, a system can be obtained that carries out this detection of the animal in a highly reliable manner.

In particular, it holds here that the sensors comprise a first sensor and a second sensor, wherein the first sensor is arranged on a first side of the area and the second sensor is arranged on a second side of the area, wherein the first and second side of the area are opposite each other so that an animal passing the area in or opposite to the walk-through direction moves between the first side and the second side. With this variant, with a known, predefined distance between the first sensor and the second sensor, and from a measured distance between the first sensor and a first side of the animal, and a measured distance between the second sensor and a second side of the animal, an indication can be obtained about a width of the animal when the animal passes the area in or opposite to the walk-through direction. The signal processing unit can be designed such that when the thus determined width exceeds a predefined value, an animal is detected that has passed the area. This can, for instance, be elaborated further when, first, the signal processing unit determines that this width exceeds the predefined value, and thereupon further determines that the width drops below the predefined value and then determines that the animal has passed the area.

Preferably, it holds here that the first and second sensors are opposite each other relative to the walk-through direction.

More particularly, it holds here that a direction of the distance between the first and second sensor is at least virtually perpendicular to the walk-through direction. In this manner, a width of an animal in the direction perpendicular to the walk-through direction can be detected which is equal to the distance between the first and second sensor minus the measured distances between the first sensor and the animal and the second sensor and the animal, respectively. Here, the distance between the first sensor and the animal, with the animal passing the area in or opposite to the walk-through direction, is equal to the distance between the first sensor and a first point of the animal located on a first side of the animal, while the distance between the second sensor and the animal is equal to the distance between the second sensor and a second point of the animal located on a second side of the animal. Here, as a rule, the first and the second points of the animal are symmetrical relative to a longitudinal direction of the animal. This means that in this manner, immediately, a good indication is obtained for a measured, local width of the animal. Again, in this manner, it can for instance be concluded by the signal processing unit that an animal has been detected when a thus calculated width of the animal exceeds a predefined value. Here, too, it is expected that when the animal passes the area in, for instance, the walk-through direction, at a first moment in time, the measured width of the animal exceeds a defined minimum width to then increase further and thereupon decrease again to below the predefined value mentioned. Between these moments in time, for instance the width of the body of the cow is detected.

According to an advanced embodiment, it holds that the sensors comprise a third sensor, wherein the third sensor is arranged on the first side of the area, while, in the walk-through direction, the first and third sensor are separated from each other at a distance.

Here, it holds in particular that the signal processing unit is designed for determining, on the basis of the courses over time of the information obtained per sensor about a distance, whether an animal has passed the area and whether the animal has passed the area in the walk-through direction or has passed the area opposite to the walk-through direction.

Different types of sensors known per se can be used for determining this distance. For instance, ultrasonic sensors can be used for transmitting ultrasonic signals and receiving reflections of transmitted ultrasonic signals. It is also conceivable that, for instance, laser sensors are used for transmitting laser signals and for receiving reflections of transmitted laser signals.

In particular it holds that the system is further provided with identification means for identifying an animal that is present in the area. The identification means may be designed for reading out an identification label worn by an animal. The identification means are, in particular, connected to the signal processing unit for supplying information about an identified animal to the signal processing unit. The signal processing unit may be designed for detecting that an animal has passed the area in the walk-through direction without the animal having been identified and/or the signal processing unit is designed for detecting that an animal has passed the area opposite to the walk-through direction without the animal having been identified. The signal processing unit may also be designed for counting the number of animals having passed the area in a walk-through direction.

In particular it further holds that the signal processing unit is designed for detecting an animal that has passed the area, at least partly, in the walk-though direction and has then returned in a direction opposite to the walk-through direction and has left the area again The milking parlour according to the invention is **characterized in that** the milking parlour is provided with a system according to the invention for detecting an animal having passed a defined area in or opposite to a walkthrough direction. If the animals, such as cows, enter the pathway via the entrance of the pathway, it is intended that the animals walk in line through the pathway while, each time, a leading animal enters the empty milking place most at the rear relative to the entrance. The animal that follows will then enter a free milking place situated in front of it, with respect to the entrance, etc.

In particular, it holds that in the pathway, a plurality of entries to milking places is included, while the entries are separated from each other in a longitudinal direction of the pathway, and wherein each entry gives access to one of the milking places.

Here, it holds in particular that each entry is formed by a side exit of the pathway, or that the pathway is provided with a widening in which at least one milking place is included, with an individual entry to this milking place.

Preferably, it holds that the area is located between the entrance of the pathway and a first entry, while in the pathway, between the area and the entrance, no further entries are located, wherein the walk-through direction of the area extends in a walk- through direction of the pathway in a direction away from the entrance. Hence, viewed over time, the first entry is the last entry that will be entered by an animal. Preferably, the pathway has a width that is slightly greater than the width of a cow so that cows cannot pass each other in the pathway.

The milking parlour is preferably provided with a system that is further provided with identification means as discussed hereinabove. The advantage of such a milking parlour is that, upon entering the pathway, the animals are identified one by one so that it is known which animal eventually enters which milking place. However, when an animal is not identifiable for whatever reason, the system will still detect that an animal has passed the area in a walk-through direction. Then, it is clear in any case that there is an unidentified animal and it is also known which milking place this unidentified animal will enter. If, in that case, there are no further animals that are not identified, this results in that, in use, the identity of an animal of each milking place is known save one milking place. If it were not known that one of the animals had not been identified, such an animal would escape the observation of the system completely, resulting in that from all subsequent animals, erroneous suppositions are made with respect to which milking place they will occupy. The milking parlour according to the invention does not have this problem while, owing to the system for detecting animals that is used in a milking parlour, a highly reliable system for detecting animals can be obtained.

The invention will be further elucidated on the basis of the drawing. In the drawing:
Fig.1A shows a first embodiment of a system for detecting an animal passing a defined area in or opposite to a walk-through direction of the area;
Fig. 2A shows a second embodiment of a system for detecting an animal passing a defined area in or opposite to a walk-through direction of the area;
Fig. 3A shows a third embodiment of a system for detecting an animal passing a defined area in or opposite to a walk-through direction of the area;
Fig. 4A shows a fourth embodiment of a system for detecting an animal passing a defined area in or opposite to a walk-through direction of the area;

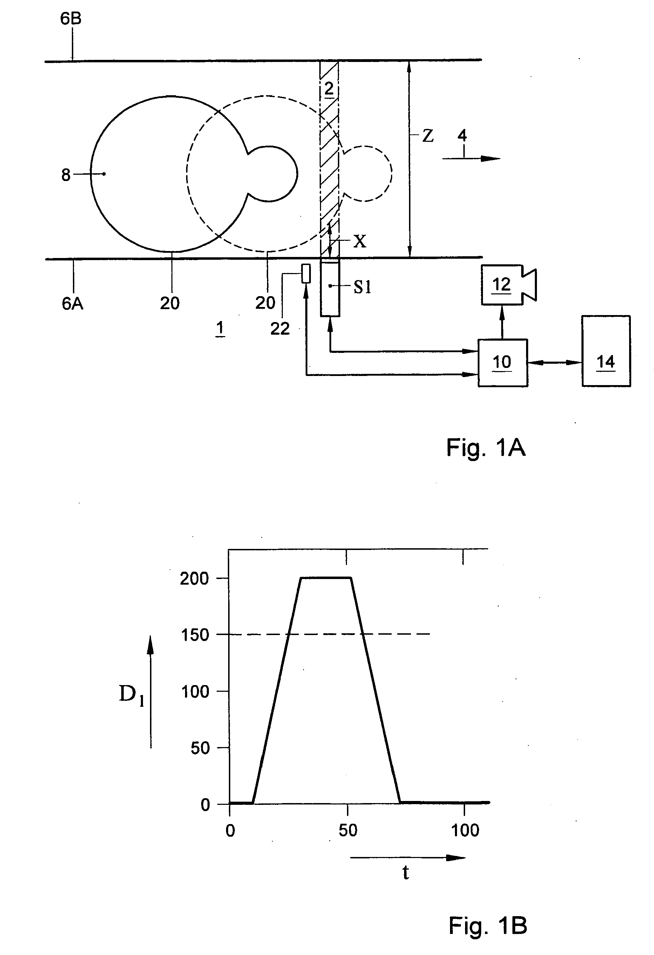

Fig. 1B shows signals occurring in the system according to Fig. 1A;

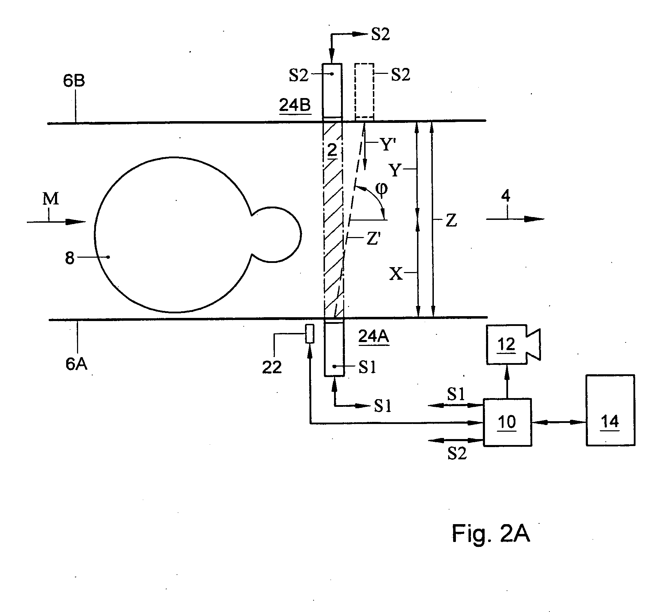

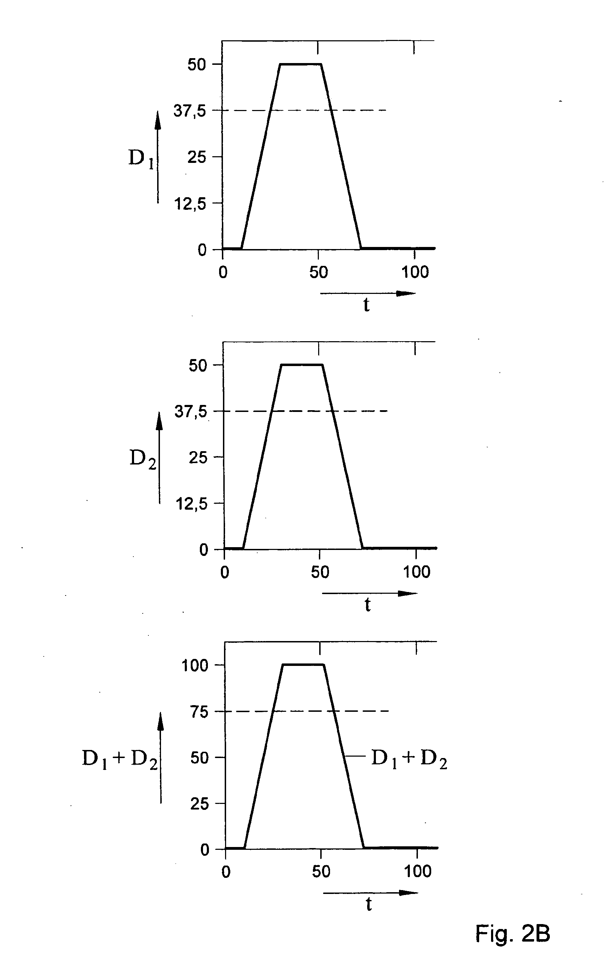

Fig. 2B shows signals occurring of the system according to Fig. 2A;

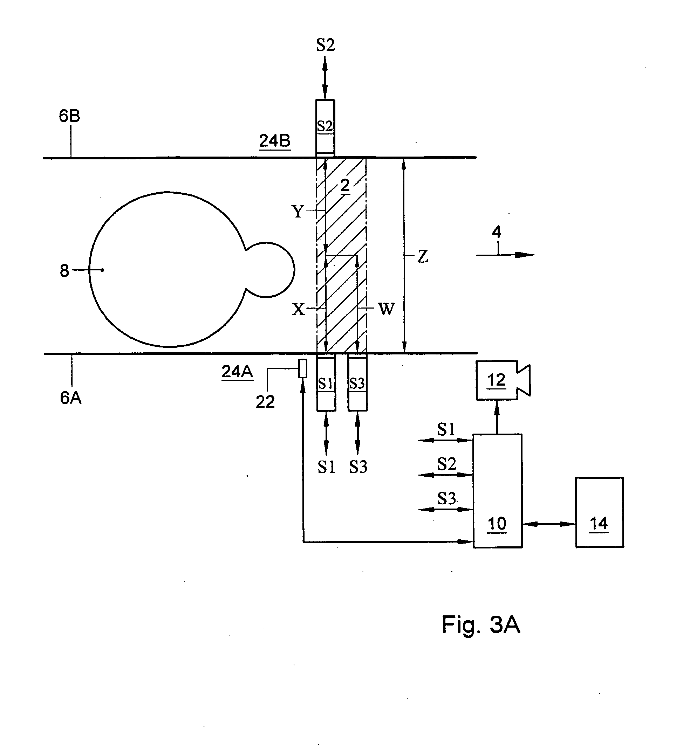

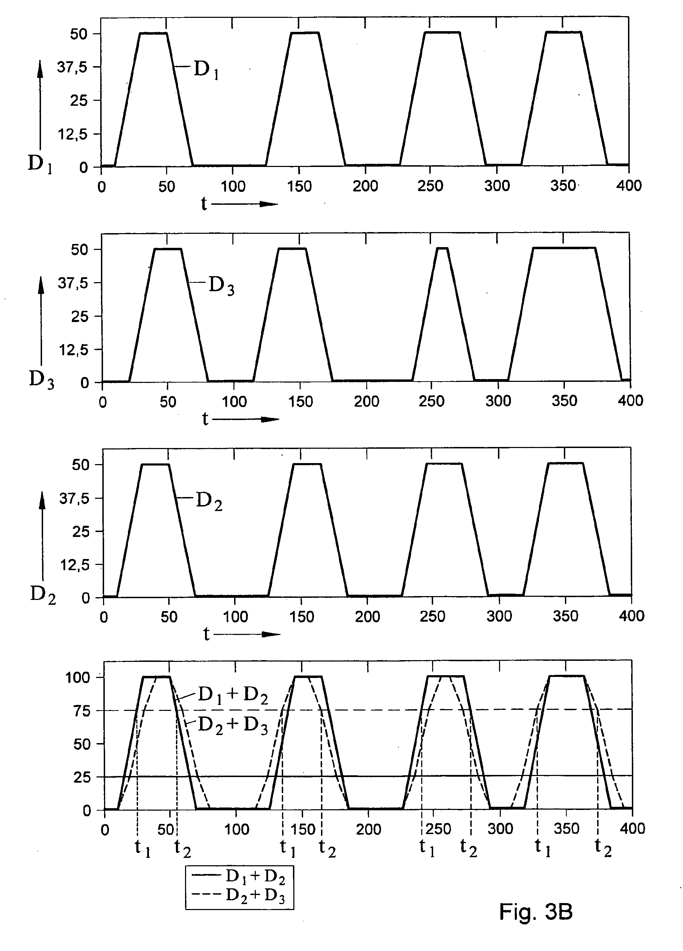

Fig. 3B shows signals occurring of the system according to Fig. 3A;

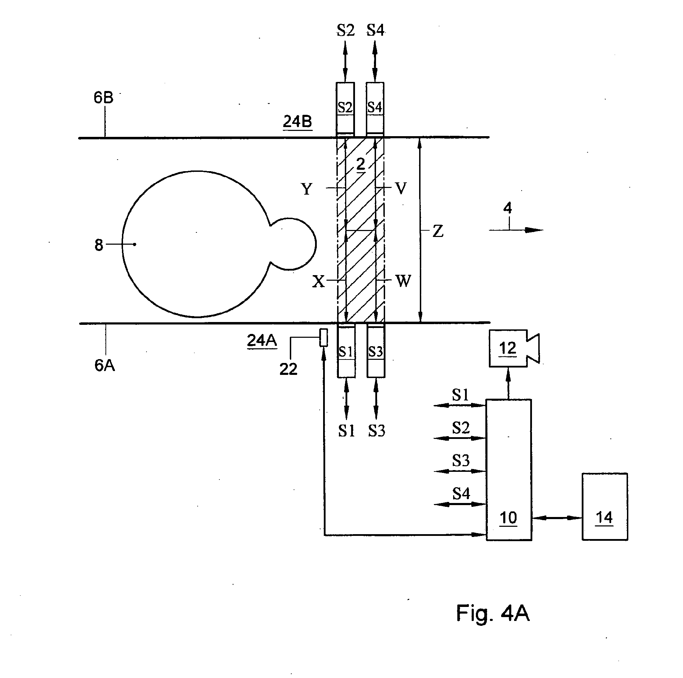

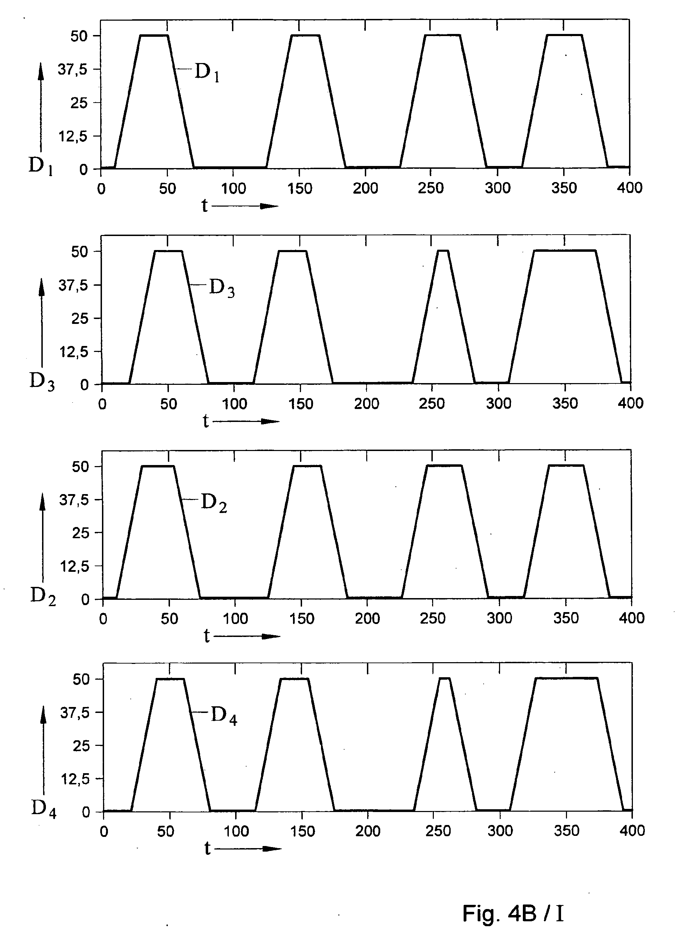

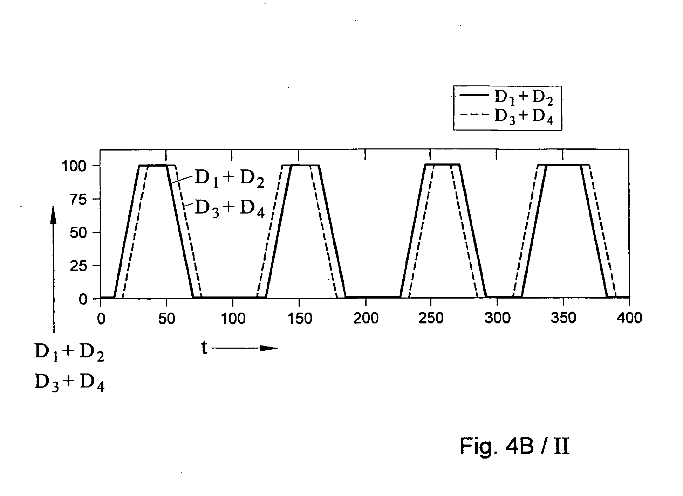

Fig. 4B/1 shows signals occurring of the system according to Fig. 4A;
Fig. 4B/II shows signals occurring of the system according to Fig. 4A;
   and

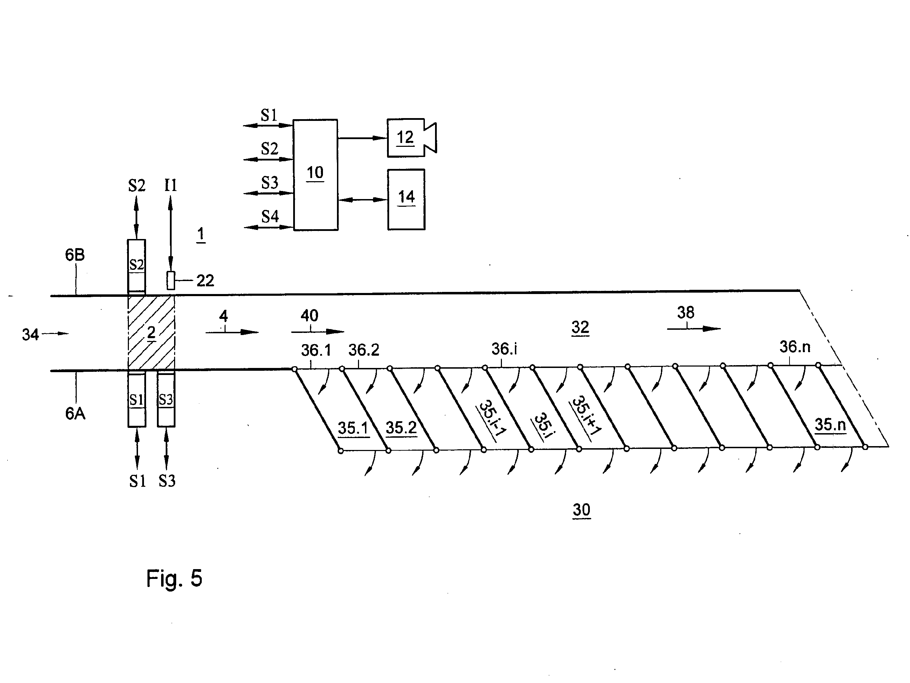

Fig. 5 shows a milking parlour according to invention.
Fig. 1A indicates, with reference numeral 1, a system for detecting an animal passing a defined area 2 in or opposite to a walk-through direction 4 of the area. In this example, the area is bounded by two opposite gates 6A and 6B. An animal 8, such as, for instance, a cow, can move in the direction 4 between partitions, such as gates 6A and 6B. The system is provided with a sensor S1 which is arranged adjacent the gate 6A. The sensor S1 is coupled to a signal processing unit 10. In turn, the signal processing unit 10 is coupled to an alarm device 12 for transmitting, for instance, an audio visual alarm, and a computer 14.

The sensor S1 is designed for determining a distance between the sensor and an exterior of an animal passing the area in or opposite to the walk-through direction 4. In this example, the width of the area 2 is indicated with the arrow Z. In this example, it further holds that the maximum distance the sensor S1 can measure reaches to approximately halfway the area, i.e. the sensor S1 is approximately equal to 0.5xZ. If the animal is at a position as indicated in Fig. 1A, the sensor S1 will therefore measure a distance 0.5xZ, i.e. the maximum distance the sensor S1 can measure because the sensor does not "see" the animal. When the animal moves in the walk-through direction, the sensor will first measure a distance between the sensor S1 and a head 16 of the animal 8, when the animal walks on, the sensor S1 will start measuring a distance between the sensor S1 and the body 18 of the animal. All this is represented in Fig. 1A in dotted lines. In Fig. 1A, with respect to the position of the animal shown in dotted lines, the measured distance is indicated with X. When the animal walks on from the position shown in dotted lines, the distance X will increase. In this example, the sensor S1 produces a signal D1 that is equal to zero when the sensor detects no animal, i.e. when, up to the maximum distance 0.5xZ, no animal is measured. The signal D1=50 when the distance X between the animal and the sensor S1 is equal to zero. In this example, 0.5xZ equals 50 cm. It holds that D1 = 0.5xZ-X.

In Fig. 1B is represented the course of the distance measured over time by the sensor when an animal moves in the area. In this example, this signal D1 is supplied to the signal processing unit 10. The measured signal D1 represented in Fig. 1B is schematically indicated. What appears therefrom is that, initially, D1=0, i.e. in this example, the maximum distance X=0.5xZ is measured. When the animal thereupon enters the area 2, which area is schematically indicated in hatchings in Fig. 1A, the value of D1 will start to increase. When the value D1 passes the predefined threshold value of, for instance, 37.5, the signal processing unit assumes that the animal is with its body in the area 2. After this, the signal will still increase slightly until the animal is with its widest portion 20 before the sensor S1. When, thereupon, the animal walks on, the signal will start to decrease as is clear from Fig. 1B. When, thereupon, the signal drops below a predefined threshold value, for instance 150, the signal processing unit 10 concludes that animal has passed the respective area 2 in the walk-through direction 4.

In this example, the sensor S1 is the ultrasonic sensor known per se designed for transmitting ultrasonic signals which, after reflection on the animal, are received again by the ultrasonic sensor S1. Such a sensor is also known as a transducer. Here, the ultrasonic sensor functions both as a transmitting unit and receiving unit. This is, however, not required. Transmitting unit and receiving unit can also be separated from each other. In this example, pulsed ultrasonic signals are transmitted by the ultrasonic sensor S1. On the basis of the course over time during which an ultrasonic pulse is transmitted and then received after reflection, the distance X can be determined. To prevent signals from mutually influencing each other, the sensors may be activated and deactivated sequentially, so that an animal can only be measured by one sensor at the time.

In this example, the system is further provided with identification means known per se that are also connected to the signal processing unit 10. In this example, the identification means 22 generate an electromagnetic interrogation field in the area 2. In this example, the animals may be provided with an identification label that responds when they enter the electromagnetic interrogation field 22. Thus, the identification system 22 can read out an identification label of an animal present in an area 2. The thus read information about the identity of an animal is supplied to the signal processing unit 10. The label may be provided with a transponder known per se that responds when it is introduced into the electromagnetic interrogation field. The transponder may be provided with a resonant circuit that is coupled to a chip, while the chip and the resonant circuit draw their energy from the interrogation field for reacting by transmitting an identification code stored in the chip.

When the signal processing unit detects that, on the one side, an animal has passed the area 2 as described hereinabove, while, on the other side, no identification label of the animal has been read with the aid of the identification means 22, the signal processing unit 10 can generate an alarm, via the alarm device 12, so that for instance a farmer can inspect the respective animal. Further, the signal processing unit can supply information to the computer 14 about, for instance, the identity of the identified animals. The signal processing unit can also supply information to the computer 14 about a counted number of animals having passed the area 2. It is also conceivable that the signal processing unit supplies the order in which identified animals have been identified to the computer 14, while it can also be indicated that there is, for instance, an unidentified animal between specific identified animals. When the order of the animals in which they have passed the area 2 does not change, thus, a non-identified animal can be retrieved between the identified animals.

In Fig. 2A, a second embodiment of a system according to the invention is indicated. Here, parts corresponding to Fig. 1A are provided with the same reference numerals. Hereafter, only the differences to the apparatus according to Fig. 1A will be explained in further detail. Presently, the system according to Fig. 2A is provided with two sensors which are each designed for determining a distance between the sensor and an exterior of an animal. The sensors S1 and S2 are arranged at mutually different positions. The first sensor S1 is arranged on a first side 24A of the area while a second sensor S2 is arranged on a second side 24B of the area 2, while the first and second sides 24A, 24B are opposite each other so that an animal passing the area 2 in or opposite to the walk-through direction 4 moves between the first side 24A and the second side 24B.

The sensor S2 too is designed for measuring a distance Y between the animal 8 and the sensor S2, while in this example, the second sensor S2 can measure a maximum distance equal to 0.5xZ. The second sensor further produces a signal D2 that is equal to 0.5xZ-Y. In this example, the animal 8 moves in the walk-through direction 4 through the area. This happens within the times t=0 and t=100 seconds. Completely analogously to what is described hereinabove, the sensor S1 produces the signal D1. Simultaneously, the sensor S2 produces the signal D2. Presuming that the animal is symmetrical and is present approximately along a center N of the width Z of the distance between the gates 6A and 6B, the sensor S2 will measure a signal D2 that is comparable to the signal D1 The signals D1 and D2 are supplied to the signal processing unit. The signal processing unit 10 adds up the signals D1 and D2 as shown in Fig. 2B. In this example, the sum of the signals D1 + D2 is equal to Z-Y-X and thus corresponds to a measured width of the animal. Therefore, with the aid of the sensors S1 and S2, a width of a part of an animal present in the area 2 can be determined. It will be clear that this is possible independently of the fact whether a maximum distance the sensors S1 and S2 can each measure is equal to 0.5xZ or to a different value. This holds, broadly speaking, for the exemplary embodiments outlined here. The only thing the signal processing unit must know is the distance Z between the sensors S1 and S2 and the measured distances X and Y. Naturally, it is not required either that the sensor S1 produces a signal D1 that is equal to 0.5xZ-X. Naturally, the sensor S1 could also simply have produced the signal X. Completely analogously, the sensor S2 could have produced the signal Y. However, in that case, the signal processing unit 10 should have calculated the width of the animal according to the width B=Z-X-Y. Presently however, it holds that the width is B-D1+D2. As the width B is determined it can be accurately established that an animal has passed the area 2. In this example, the signal processing unit 10 determines, on the basis of D1 +D2, when the animal has passed the area. Firstly, the signal processing unit 10 determines that the signal D1 +D2 has exceeded a threshold value of, for instance, 75 cm. This means that an animal is walking through the area while a width of the animal is detected which is 75, whereupon, approximately after a time t=50 seconds, the value D1 +D2 starts to decrease again until it drops below the value 75. Then, the signal processing unit concludes that the animal has passed the area 1 in walk-through direction 4. The operation of the system is further completely analogously to what has been explained hereinabove on the basis of Fig. 1A.

With the system according to Fig. 2A it therefore holds that the first and second sensors are opposite each other relative to the walk-through direction. It also holds that the direction of the distance between the first and second sensor (indicated here with arrow Z) is at least virtually perpendicular to the walk-through direction 4. Other variations are conceivable too, with, for instance the sensor S2 provided at the position shown in dotted lines in Fig. 2A. Although it then still holds that the first and second sensor are opposite each other relative to the walk-through direction, presently, the direction of the distance between the first and second sensor includes an angle ϕ with the walk-through direction that is unequal to 90°. The distance between the position indicated in dotted lines of the sensor S2 and a side of the animal, and the distance between the position of the sensor S1 and a side of the animal, and then combined with the mutual distance between the sensors, does not exactly correspond to a width of the animal when the animal is exactly in the walk-through direction. This is, actually, not a real problem because generally, the animal will not move exactly in the walk-through direction 4 but will sometimes take up a position that is displaced relative to the walk-through direction, so that, also with the sensor S2 arranged as is represented in full lines, some deviations relative to the real width of the animal can occur. In these examples, it does however hold that each sensor measures the distance in a direction that is at least virtually perpendicular to the walk-through direction 4. Naturally, the sensor S1 and the sensor S2, shown in dotted lines, can be turned towards each other so that they measure a distance along the line Z' as indicated in Fig. 2A. Such variants are understood to fall within the framework of the invention.

In Fig. 3A, a third embodiment of a system according to the invention is represented. Parts that correspond to the system according to Figs. 1A and 2A have been provided with the same reference numerals. In addition to the sensor S1 and S2, a third sensor S3 is placed. The third sensor S3 is arranged on a first side 24A of the area, while the first and the third sensors (S1 and S3) are separated from each other at a distance in the walk-through direction 4.

In this embodiment, the signal processing unit is designed for determining, on the basis of the course of the measured distances, whether an animal has passed the area and for determining whether the animal has passed the area in a walk-through direction or has passed the area opposite to the walk-through direction. This latter may be realized as follows. In Fig. 3B, again, the distances are represented that are measured by the sensors. Here too, it holds that when the distance is equal to 0.5xZ, the signals shown in Fig. 3B have the value zero. When a distance is measured that is equal to zero, this is represented by the signals D1, D2 and D3 with the value 50. Between 0 and 100 seconds, a situation is represented where an animal passes the area 2 in the walk-through direction 4. Here, the signals D1 andD2 coincide, as discussed on the basis of Fig. 2A. The signal D3 is the signal that is generated by the sensor S3. As the sensor S3 is included downstream in the walk-through direction 4 relative to the sensor S1, the signal D3 will be slightly shifted in phase with respect to the signal D1. Then, the signal processing unit determines the signals D1+D2 and the signals D2+D3. Again, the signal D1+D2 corresponds to the width of the animal as discussed hereinabove (in this case this is equal to Z-Y-X) the signal D2+D3 is also approximately equal to the width of the animal (in this case, this signal equals Z-Y-W).

In a period between 100 and 200 seconds, the signals D1, D2, D3, D1+D2 and D2+D3 are represented in Fig. 3B for the case the animal moves through the area 2, however, presently, in a direction opposite to the walk-through direction 4. In the period between 200 and 300 seconds, the signals D1, D2, D3, D1+D2, and D2+D3 are represented in a situation where the animal, viewed in Fig. 3A, enters the area 2 from the left hand side, to thereupon, leave the area 2 again, for instance walking backwards. Finally, for the periods between 300 and 400 seconds, the signals D1, D2, D3, D1+D2, and D2+D3 are represented in a situation where the animal, viewed in the drawing of Fig. 3A, is present in the area 2 from the right hand side to then leave the area 2 again in the walk-through direction, for instance walking backwards. The signal processing unit, which generates the signals D1+D2 and the signals D2+D3 can, on the basis of these signals, establish the following. When, at the time t=t1 the signal D1+D2 exceeds the value 75, this means that a width of the animal is measured in the area 2 which corresponds to the body of the animal. However, at the time t1, the signal D2+D3 is lower than the signal D1+D2. This means that at that moment, the sensor S1 still measures a narrower part of the animal. This may indicate that, viewed in the drawing from left to right, the animal moves in the walk-through direction 4. Eventually, the signal D1+D2 will increase until the full width of the animal is measured. This also holds for the signal D2+D3. Thereupon, when the animal walks on, the signal D1+D2 will start to decrease again until, at the time t=t2, this signal drops below the limit with the value 75. However, at this time t=t2, it holds that the value of the signal D2+D3 is greater than the value of the signal D1+D2. This indicates that the sensors S1 and S2 measure a width of the animal that is smaller than the width measured with the sensors S3 and S2. This is caused in that the sensor S3 is downstream of the sensors S1 in the walk-through direction. In other words, it is thus confirmed that the animal has moved further downstream in the walk-through direction 4.

However, if the animal were to walk through the area 2 from the right to the left, opposite to the walk-through direction, first, the signal D2+D3 would increase to above the threshold value 75. This moment is indicated in Fig. 3B with the time t1'. At the time t1' however, it holds that the signal D1+D2 is smaller than the signal D2+D3. After the time t1', the signals D1+D2, D2+D3 increase further until a maximum value has been reached that corresponds at least virtually to a widest width of the animal. Then, when the animal walks on, first, the signal D2+D3 will start to decrease again because then, the sensor S3 starts to detect the rear side of the animal. At the time t2' when the signal D2+D3 drops below the threshold value 75, the value of the signal D1+D2 is still greater than the value of the signal D2+D3. Based on this, the system can conclude that the animal has passed the area 2 from the right to the left in the drawing, opposite to the walk-through direction.

In the case the animal walks in the area from left to right in the drawing, stops and then leaves the area opposite to the walk-through direction 4, the signals are measured as indicated between 200 and 300 seconds. When the signal D1+D2 is equal to the threshold value at the time t1" and t2", it appears that the value of the signal D2 and D3, both at the time t1" and at the time t2", is smaller than the value of the signal D1+D2 at the times t1" and t2". From this, it is then concluded that the animal has entered the area in the walk-through direction 4 to, thereupon, leave the area again in a direction opposite to the walk-through direction 4. Finally, between the times 300 and 400 seconds, the signal D1+D2 and D2+D3 are shown when the animal walks in the area 2 in a direction opposite to the walk-through direction, to thereupon leave the area 2 again in the walk-through direction. From this, it appears that when first, the signal D2+D3 exceeds the threshold value 3 at the time t1" the value of the signal D1+D2 is smaller. It also holds that when the value of the signal D2+D3 becomes, once more, equal to the threshold value 75 at the time t2", the value of the signal D1+D2 is smaller. From this situation, the signal processing unit can conclude that the animal has entered this area in a direction opposite to the walk-through direction and has, thereupon, left the area again in the walk-through direction. In the above, the differences between D1 and D2 and D2+D3 are discussed on the basis of the value of these signals at the times that they are equal to a threshold value. However, this needs not be the case. The signal processing unit can conclude, for instance, that the animal has passed the border area in a walk-through direction when the signal D2+D3 lags in phase with the signal D1+D2 (see the situation between 0 and 100 seconds). It can be concluded that the animal has passed the area in an opposite direction when the signal D1+D2 lags in phase with the signal D2+D3. This is the situation as shown between 100 and 200 seconds. The situation between 200 and 300 seconds can be recognized by the signal processing unit when the signal D2+D3, save when it has reached it maximum value, is predominantly smaller than the signal D1+D2. Another criterion for the situation between 100 and 200 seconds may be that the signal D2+D3 is enclosed by the signal D1+D2. As to the signals D1+D2 and D2+D3, exactly the opposite applies to the situation between 300 and 400 seconds. Now that, for instance, the signal D2+D3 generally encloses the signal D1+D2, the signal processing unit can conclude that the animal has indeed entered the area from the right side of the drawing but has not passed it but instead thereof has left it again in the walk-through direction.

In Fig. 4A, an embodiment is shown wherein parts corresponding with Fig. 3A are provided with the same reference numerals. With respect to Fig. 3A, the system according to Fig. 4A is further provided with a fourth sensor S4. Here, it holds that the third sensor S3 is arranged on the first side of the area and the fourth sensor S4 is arranged on the second side of the area, while the first and third sensor and the second and fourth sensor are separated from each other at a distance in the walk-through direction 4. It holds that the first and second sensors are opposite each other relative to the walk-through direction and that the third and fourth sensors are opposite to each other relative to the walk-through direction. It furthermore holds that the direction of the distance between the first and second sensor and the direction of the distance between the third and fourth sensor are each at least virtually perpendicular to the walk-through direction 4. Again, the direction of these distances is represented in the drawing with Z. Again, the sensor S1 measures the distance X to the animal; the sensor S2 the distance Y, the sensor S3 the distance W and the sensor S4 the distance V. However, in this case, the sensors produce signals D1 D2, D3 and D4 (see Fig. 4B/I) wherein for D3 it holds that this is equal to 0.5xZ-W, and for D4 it holds that this is equal to 0.5xZ-V. Therefore, the signals D1, D2 and D3 correspond, as is discussed on the basis of Fig. 3A. As will be clear on the basis of the drawing, the signal D4, in combination with the signal of S3 and the known distance Z between the sensors S3 and S4 which, in this example, is chosen to be equal to the distance between the sensors S1 and S2, produces information about the width of the animal at a position between the sensors S3 and S4. Presently, the signal processing unit determines the signals D1 and D2 and the signals D3+D4 as shown in Fig. 4B/II. Presently, the signal D3+D4 gives a better approximation of the width of the animal between the sensors S3 and S4 than is the case in Fig. 3A because in Fig. 3A, the shortest distance between the sensors S3 and the direction of the shortest distance between the sensors S3 and S2, which is perpendicular to the walk-through direction 4. In the example of Fig. 4B/II, the signal D3+D4 corresponds well with the measured width of the animal. Between 0 and 100 seconds, it appears once more that the signal D3+D4 lags in phase with the signals D1+D2. From this, the signal processing unit concludes that the animal passes the area in the walk-through direction. In the period between 100 and 200 seconds, it appears that the signal D3+D4 leads in phase with the signal D1+D2. From this, it appears that the animal passes the area in a direction opposite to the walk-through direction 4. In a situation between 200 and 300 seconds, it appears that the signal D1+D2 encloses the signal D3+D4, i.e. the signal D1+D2 is generally, save its maximum value, greater than the signal D3+D4. From this it is concluded that the animal enters the area 2 in the walk-through direction to thereupon leave the area again opposite to the walk-through direction. From Fig. 4B/II it appears that in the period between 300 and 400 seconds, the signal D3+D4 encloses the signal D1+D2, i.e. is, in general greater, save when it is maximal, than the signal D1+D2, which is interpreted by the signal processing unit as the animal entering the area in a direction opposite to the walk-through direction to, then, leave the area again in a walk-through direction. Completely analogously to what is described hereinabove, with Figs. 2A, 3A and 4A, an alarm can be generated when the presence of an animal in an area 2 is detected and when no identification label of the animal is read by means of the identification means.

The invention is not limited in any manner to the exemplary embodiments described hereinabove. For instance, in Fig. 4A, the sensor S2 and the sensor S4 can be omitted. What remains are the sensors S1 and S3, i.e. the signals D1 and D3. Now that D1 can no longer be combined with D2, a width of the animal can no longer be calculated. The course of a distance to an animal however can be analyzed. For instance, on the basis of the signals D1 and D3, the signal processing unit can draw the following conclusions. When the signal D1 leads a phase with respect to the signal D3 and has approximately the same form as the signal D3, it is concluded that the animal has passed the area 2 in the walk-through direction. When the signals D1 and D3 have approximately the same form and when the signal D1 lags in phase with the signal D3, it is concluded that the animal has passed the area 2 in a direction opposite to the walk-through direction. When the signal D1 encloses the signal D3, i.e., is generally greater than the signal D1, it is concluded that the animal enters the area in the walk-through direction to, then, leave the area in a direction opposite to the walk-through direction. When, conversely, the signal D3 encloses the signal D1, it is concluded that the animal enters the area 2 in a direction opposite to the walk-through direction to thereupon leave the area again in the direction of the walk-through direction. In this example, the signal processing unit is further designed for detecting that an animal has passed the area in the walk-through direction without the animal having been identified and/or that the signal processing unit is designed for detecting that an animal has passed the area opposite to the walk-through direction without it having been identified. Also, in each of the examples mentioned, to this end, the signal processing unit may be designed for counting the number of animals that has passed the area in the walk-through direction. In addition, the signal processing unit can be designed for counting the number of animals that has passed the area in the direction opposite to the walk-through direction.

In Fig. 5, a milking parlour for milking animals is shown which milking parlour is indicated with reference numeral 30. The milking parlour is provided with a pathway 32 with an entrance 34 and a number of milking places 35.i (i= 1, 2, ..., n) that the animals can enter via the pathway. The pathway is provided with a number of entries, in this example side exits 36.i (i=1, 2, ..., n) which are separated from each other in a longitudinal direction 38 of the pathway, wherein each side exit gives access to one of the milking places 35.i. The milking parlour is further provided with a system for detecting animals as discussed hereinabove in the example of the system according to Fig. 3. The area 2 where the animals are detected by the earlier described system is located between the entrance 34 and the first side exit 36.1. In other words, in the pathway between the area and the next side exit 36.1, there are no further side exits. A walk-through direction 4 of the area extends therefore in a walk-through direction 40 of the pathway in a direction away from the entrance 34. Between the entrance and the first side exit 36.1, there are no further side exits. The operation of the system is as follows. The animals, in this example cows, enter the pathway 32 one by one via the entrance 34. Each animal wears a transponder known per se which, when the animal is present in the area 2, under the influence of the interrogation field that is transmitted by the identification means 22, transmits a signal with information about the identification of the animal. In this manner, the animals are identified one by one. The first animal that enters the pathway 32 will proceed in the direction 40 to, then, enter the milking place 35.n via the side exit 36.n. The following animal walking behind the first animal will walk on for, then, entering the milking place 35.n-1 via the side exit 36.n-1. Then, completely analogously, in the order the animals enter, the following free milking places will be occupied by these animals. The system 1 detects whether an animal in fact passes the area 2 in the walk-through direction and whether the animal is also identified. If this is the case, one can conclude with certainty which animal is present at which milking place. When the system establishes that an animal passes the area 2 in walk-through direction 4 while not being identified, the system knows in any case in which milking place an unidentified animal can be found. All these data can be stored in the computer14. An advantage then is that the system indeed works where animals that are identified are present. If an animal enters the area 2 from the entrance 34, is optionally identified to, thereupon, leave the entrance 34 again walking backwards, this too is detected by the system as discussed hereinabove, and, for instance, an alarm 12 can be produced. It can also be established that the animal with the respective identification has not walked along in the pathway and will therefore not enter one of the milking places. This too ensures that it is known which animals are located at which milking places. If, thereafter, the animal were to walk through the area 2 again in the walk-through direction 4, it is still identified as being an animal that has passed the area, and it is also known which will be the first free milk place the animal will enter. In this manner, a particularly well functioning milking parlour is obtained, while it is ensured as much as possible that the correct suppositions are made about the identity of the animals present in specific milking places.

The invention is not limited in any manner to the embodiments described hereinabove. For instance, the system as outlined on the basis of Figs. 1A-4B/II can also be used in combination with other apparatus such as, for instance, feeding stations and the like. Animals other than cows can be detected too, such as, for instance, sheep. Instead of with side exits, the pathway of Fig. 5 can also be provided with at least one widening in which at least one milking place with an individual entry is included. Such variants are each understood to fall within the framework of the invention as defined in the appended claims.

## Claims

1. A system for detecting an animal having passed a defined area in or opposite to a walk-through direction of the area, **characterized in that** the system is provided with at least one sensor which is designed for obtaining information, by means of a measurement with the sensor, about a distance between the sensor and an exterior of an animal present in the area, and a signal processing unit which is connected to the at least one sensor and which is designed for determining, at least on the basis of the course over time of the information obtained with the at least one sensor about a distance when an animal moves in the area, whether an animal has passed the area.

2. A system according to claim 1, **characterized in that** the system is provided with at least two sensors which are each designed for obtaining information, by means of a measurement, about a distance between the respective sensor and an exterior of an animal present in the area, wherein the sensors are arranged at mutually different positions and wherein the signal processing unit is designed for combined processing of the courses over time of the information obtained per sensor about a distance when an animal moves in the area, for determining whether an animal has passed the area.

3. A system according to claim 2, **characterized in that** the sensors comprise a first sensor and a second sensor, wherein the first sensor is arranged on a first side of the area and the second sensor is arranged on a second side of the area, wherein the first and second side of the area are opposite each other so that an animal passing the area in or opposite to the walk-through direction moves between the first side and the second side.

4. A system according to claim 3, **characterized in that** the first and second sensors are opposite each other relative to the walk-through direction.

5. A system according to claim 3 or 4, **characterized in that** a direction of the distance between the first sensor and the second sensor is at least virtually perpendicular to the walk-through direction.

6. A system according to claim 2, **characterized in that** the sensors are separated from each other at a distance in the walk-through direction, wherein the signal processing unit is designed for determining, on the basis of the courses over time of the information obtained per sensor about a distance when an animal moves in the area, whether an animal has passed the area, and for determining whether the animal has passed the area in the walk- through direction or opposite to the walk-through direction.

7. A system according to any one of the preceding claims, **characterized in that** the system is provided with at least three sensors.

8. A system according to claims 3 and 7, **characterized in that** the sensors comprise a third sensor, wherein the third sensor is arranged on the first side of the area, while the first and third sensor are separated from each other at a distance in the walk-through direction.

9. A system according to claim 8, **characterized in that** the signal processing unit is designed for determining, on the basis of the courses over time of the information obtained per sensor about a distance, whether an animal has passed the area and whether the animal has passed the area in the walk-through direction or has passed the area opposite to the walk-through direction.

10. A system according to any one of the preceding claims, **characterized in that** the system is provided with at least four sensors.

11. A system according to claims 3 and 10, **characterized in that** the sensors comprise a third and a fourth sensor, wherein the third sensor is arranged on the first side of the area and the fourth sensor is arranged on the second side of the area, while the first and third sensor and the second and fourth sensor are separated from each other at a distance in the walk-through direction.

12. A system according to claim 11, **characterized in that** the first and second sensor are opposite each other relative to the walk-through direction and that the third and fourth sensor are opposite each other relative to the walk-through direction.

13. A system according to claim 12, **characterized in that** a direction of the distance between the first and second sensor and a direction of the distance between the third and the fourth sensor are each at least virtually perpendicular to the walk-through direction.

14. A system according to claim 11, 12, or 13, **characterized in that** the signal processing unit is designed for determining, on the basis of the courses over time of the information obtained per sensor about a distance, whether an animal has passed the area and for determining whether the animal has passed the area in the walk-through direction or has passed the area opposite to the walk-through direction.

15. A system according to any one of the preceding claims, **characterized in that** at least a part of the sensors are ultrasonic sensors for transmitting ultrasonic signals and receiving reflections of the transmitted ultrasonic signals on the animal.

16. A system according to claim 15, **characterized in that** the system is designed for transmitting pulsed ultrasonic signals with the ultrasonic sensors.

17. A system according to any one of the preceding claims, **characterized in that** at least a part of the sensors are laser sensors for transmitting laser signals and receiving reflections of the transmitted laser signals on the animal.

18. A system according to claim 17, **characterized in that** the system is designed for transmitting pulsed laser signals with the laser sensors.

19. A system according to any one of the preceding claims, **characterized in that** the system is further provided with identification means for identifying an animal present in the area.

20. A system according to claim 19, **characterized in that** the identification means are designed for reading out an identification label worn by an animal.

21. A system according to claim 19 or 20, **characterized in that** the identification means are connected to the signal processing unit for supplying information about an identified animal to the signal processing unit.

22. A system according to claim 21, **characterized in that** the signal processing unit is designed for detecting that an animal has passed the area in the walk-through direction without the animal having been identified and/or that the signal processing unit is designed for detecting that an animal has passed the area opposite to the walk-through direction without the animal having been identified.

23. A system according to claim 22, **characterized in that** the system is designed for generating an alarm when the signal processing unit detects an animal having passed the area in the walk-through direction without the animal having been identified and/or when the signal processing unit has detected an animal having passed the area opposite to the walk -through direction without the animal having been identified.

24. A system according to any one of the preceding claims, **characterized in that** the signal processing unit is designed for counting the number of animals having passed the area in the walk-through direction and/or that the signal processing unit is designed for counting the number of animals having passed the area in a direction opposite to the walk-through direction.

25. A system according to any one of the preceding claims, **characterized in that** the signal processing unit is designed for detecting an animal having at least partly passed the area in the walk-through direction and then having returned in a direction opposite to the walk-through direction and having left the area again.

26. A system according to claim 1, **characterized in that** the at least one sensor measures information about the distance in a direction which is at least virtually perpendicular to the walk-through direction.

27. A system according to any one of the preceding claims, **characterized in that** each sensor of the said sensors measures the information about the distance in a direction which is at least virtually perpendicular to the walkthrough direction.

28. A milking parlour for milking animals, provided with a pathway with an entrance and a number of milking places which the animals can enter via the pathway, wherein the milking parlour is provided with a system according to any one of the preceding claims.

29. A milking parlour according to claim 28, **characterized in that** in the pathway, a plurality of entries to milking places is included wherein the entries are separated relative to each other in a longitudinal direction of the pathway and wherein each entry gives access to one of the milking places.

## Patentansprüche

1. System zum Erfassen eines Tieres, das an einem definierten Bereich in oder entgegen einer Durchgangsrichtung des Bereichs vorbeigegangen ist, **dadurch gekennzeichnet, dass** das System mit mindestens einem Sensor bereitgestellt ist, der ausgelegt ist, um Information durch eine Erfassung mit dem Sensor über eine Entfernung zwischen dem Sensor und einer Außenseite eines in dem Bereich vorhandenen Tieres zu erhalten, und eine Signalbearbeitungseinheit, die mit dem mindestens einen Sensor verbunden ist und die ausgelegt ist, um zu bestimmen, zumindest auf Basis des Zeitverlaufs der Information, die mit dem mindestens einen Sensor über einen Abstand erhalten wurde, wenn ein Tier sich in dem Bereich bewegt, ob ein Tier an dem Bereich vorbeigegangen ist.

2. System nach Anspruch 1, **dadurch gekennzeichnet, dass** das System mit mindestens zwei Sensoren bereitgestellt ist, die jeweils ausgelegt sind, Informationen durch eine Erfassung über eine Entfernung zwischen dem jeweiligen Sensor und einer Außenseite eines in dem Bereich vorhandenen Tieres zu erhalten, worin die Sensoren in gegenseitig unterschiedlichen Positionen angeordnet sind und worin die Signalbearbeitungseinheit ausgelegt ist, um die Zeitverläufe der pro Sensor erhaltenen Information über eine Entfernung gemeinsam zu bearbeiten, wenn sich ein Tier in dem Bereich bewegt, um zu bestimmen, ob ein Tier an dem Bereich vorbeigegangen ist.

3. System nach Anspruch 2, **dadurch gekennzeichnet, dass** die Sensoren einen ersten Sensor und einen zweiten Sensor umfassen, worin der erste Sensor auf einer ersten Seite des Bereichs angeordnet ist und der zweite Sensor auf einer zweiten Seite des Bereichs angeordnet ist, worin die erste und zweite Seite des Bereichs so gegenüberliegend vorliegen, so dass sich ein Tier, das in oder entgegen der Durchgangsrichtung vorbeigeht, zwischen der ersten und zweiten Seite bewegt.

4. System nach Anspruch 3, **dadurch gekennzeichnet, dass** die ersten und zweiten Sensoren relativ zu der Durchgangsrichtung einander gegenüberliegen.

5. System nach Anspruch 3 oder 4, **dadurch gekennzeichnet, dass** eine Richtung des Abstands zwischen dem ersten Sensor und dem zweiten Sensor zumindest virtuell rechtwinklig zu der Durchgangsrichtung steht.

6. System nach Anspruch 2, **dadurch gekennzeichnet, dass** die Sensoren mit einem Abstand von einander in der Durchgangsrichtung getrennt vorliegen, worin die Signalbearbeitungseinheit ausgelegt ist, um auf der Basis des Zeitverlaufs der Information, die über den Sensor über einen Abstand erhalten wurde, wenn sich ein Tier in dem Bereich bewegt, zu bestimmen, ob ein Tier an dem Bereich vorübergegangen ist, und um zu bestimmen, ob das Tier an den Bereich in der Durchgangsrichtung oder entgegen der Durchgangsrichtung vorbeigegangen ist.

7. System nach einem der vorstehenden Ansprüche **dadurch gekennzeichnet, dass** das System mit mindestens drei Sensoren bereitgestellt ist.

8. System nach Ansprüchen 3 und 7, **dadurch gekennzeichnet, dass** die Sensoren einen dritten Sensor umfassen, worin der dritte Sensor an der ersten Seite des Bereichs angeordnet vorliegt, während der erste und dritte Sensor mit einem Abstand in der Durchgangsrichtung voneinander getrennt vorliegen.

9. System nach Anspruch 8, **dadurch gekennzeichnet, dass** die Signalbearbeitungseinheit ausgelegt ist, auf Basis des Zeitverlaufs der pro Sensor erhaltenen Information zu bestimmen, ob ein Tier an dem Bereich vorüberging und ob das Tier in der Durchgangsrichtung vorbeiging oder an dem Bereich entgegen der Durchgangsrichtung vorbeiging.

10. System nach einem der vorstehenden Ansprüche, **dadurch gekennzeichnet, dass** das System mit mindestens vier Sensoren bereitgestellt wird.

11. System nach Ansprüchen 3 und 10, **dadurch gekennzeichnet, dass** die Sensoren einen dritten und vierten Sensor umfassen, worin der dritte Sensor auf der ersten Seite des Bereichs und der vierte Sensor auf der zweiten Seite des Bereichs angeordnet vorliegt, während der erste und dritte Sensor und der zweite und vierte Sensor mit einem Anstand in der Durchgangsrichtung voneinander getrennt vorliegen.

12. System nach Anspruch 11, **dadurch gekennzeichnet, dass** der erste und zweite Sensor relativ zu der Durchgangsrichtung sich einander gegenüberliegen und dass der dritte und vierte Sensor relativ zu der Durchgangsrichtung sich einander gegenüberliegen.

13. System nach Anspruch 12, **dadurch gekennzeichnet, dass** eine Richtung eines Abstands zwischen dem ersten und zweiten Sensor und eine Richtung des Abstands zwischen dem dritten und vierten Sensor sich zumindest virtuell senkrecht zu der Durchgangsrichtung befinden.

14. System nach Anspruch 11, 12 oder 13, **dadurch gekennzeichnet, dass** die Signalbearbeitungseinheit so ausgelegt ist, zu bestimmen auf der Basis der Zeitverläufe der Information, die pro Sensor über einen Abstand erhalten wird, ob ein Tier an dem Bereich vorbeigegangen ist, und um zu bestimmen, ob das Tier an dem Bereich in Durchgangsrichtung oder entgegen der Durchgangsrichtung vorbeigegangen ist.

15. System nach einem der vorstehenden Ansprüche, **dadurch gekennzeichnet, dass** zumindest ein Teil der Sensoren Ultraschallsensoren sind, um Ultraschallsignale zu übertragen und Reflektionen der an das Tier übermittelten Ultraschallsignale zu empfangen.

16. System nach Anspruch 15, **dadurch gekennzeichnet, dass** das System ausgelegt ist, gepulste Ultraschallsignale mit den Ultraschallsensoren zu übertragen.

17. System nach einem der vorstehenden Ansprüche, **dadurch gekennzeichnet, dass** zumindest ein Teil der Sensoren Lasersensoren sind, um Lasersignale zu übertragen und um Reflektionen der an das Tier übertragenen Lasersignale zu empfangen.

18. System nach Anspruch 17, **dadurch gekennzeichnet, dass** das System ausgelegt ist, gepulste Lasersignale mit den Lasersensoren zu übertragen.

19. System nach einem der vorstehenden Ansprüche, **dadurch gekennzeichnet, dass** das System weiterhin mit Identifizierungsmitteln bereitgestellt ist, um ein in dem Bereich vorhandenes Tier zu identifizieren.

20. System nach Anspruch 19, **dadurch gekennzeichnet, dass** die Identifizierungsmittel ausgelegt sind, ein von einem Tier getragenes Identifizierungsetikett zu lesen.

21. System nach Anspruch 19 oder 20, **dadurch gekennzeichnet, dass** die Identifizierungsmittel mit der Signalbearbeitungseinheit verbunden sind, um der Signalbearbeitungseinheit Information über ein identifiziertes Tier zu liefern.

22. System nach Anspruch 21, **dadurch gekennzeichnet, dass** die Signalbearbeitungseinheit ausgelegt ist, ein Tier zu detektieren, das an dem Bereich in Durchgangsrichtung vorbeigegangen ist ohne dass das Tier identifiziert wurde und/oder die Signalbearbeitungseinheit ausgelegt ist, ein Tier zu detektieren, das an dem Bereich entgegen der Durchgangsrichtung vorbeigegangen ist ohne dass das Tier identifiziert wurde.

23. System nach Anspruch 22, **dadurch gekennzeichnet, dass** das System ausgelegt ist einen Alarm zu erzeugen, wenn die Signalbearbeitungseinheit ein Tier detektiert, das in Durchgangsrichtung an dem Bereich vorübergegangen ist ohne dass das Tier identifiziert wurde und/oder wenn die Signalbearbeitungseinheit ein Tier detektiert, das entgegen der Durchgangsrichtung an dem Bereich vorbeigegangen ist ohne dass das Tier identifiziert wurde.

24. System nach einem der vorstehenden Ansprüche, **dadurch gekennzeichnet, dass** die Signalbearbeitungseinheit ausgelegt ist, die Anzahl der Tiere zu zählen, die in Durchgangsrichtung an dem Bereich vorübergegangen sind und/oder dass die Signalbearbeitungseinheit ausgelegt ist, die Anzahl der Tiere zu zählen, die entgegen der Durchgangsrichtung an dem Bereich vorbeigegangen sind.

25. System nach einem der vorstehenden Ansprüche, **dadurch gekennzeichnet, dass** die Signalbearbeitungseinheit ausgelegt ist, ein Tier zu detektieren, das zumindest teilweise an dem Bereich vorbeigegangen ist und dann in eine Richtung entgegen der Durchgangsrichtung zurückging und den Bereich wieder verließ.

26. System nach Anspruch 1, **dadurch gekennzeichnet, dass** der mindestens eine Sensor Informationen über den Abstand in eine Richtung erfasst, die zumindest virtuell rechtwinklig zu der Durchgangsrichtung steht.

27. System nach einem der vorstehenden Ansprüche, **dadurch gekennzeichnet, dass** jeder Sensor der Sensoren die Information über den Abstand in eine Richtung erfasst, die zumindest virtuell senkrecht zu der Durchgangsrichtung ist.

28. Melkstand zum Melken von Tieren, der mit einem Weg mit einem Eingang und einer Anzahl von Melkstellen bereitgestellt ist, in die die Tiere über den Weg eintreten können, worin der Melkstand mit einem System gemäß einem der vorstehenden Ansprüche bereitgestellt ist.

29. Melkstand nach Anspruch 28, **dadurch gekennzeichnet, dass** der Weg mehrere Eingänge zu den Melkstellen umfasst, worin die Eingänge relative zueinander in der Längsrichtung des Weges getrennt sind und worin jeder Eingang Zutritt zu einer der Melkstellen ermöglicht.

## Revendications

1. Système pour détecter un animal étant passé par une zone définie dans ou opposée à une direction de cheminement de la zone, **caractérisé en ce que** le système est équipé d'au moins un capteur conçu pour obtenir des informations, à l'aide d'une mesure effectuée par le capteur, quant à une distance entre le capteur et un extérieur d'un animal présent dans la zone, et une unité de traitement de signaux qui est connectée au/aux capteur(s) et qui est conçue pour déterminer, au moins d'après l'évolution, dans le temps, des informations obtenues à l'aide du/des capteur(s) quant à une distance lorsqu'un animal se déplace dans la zone, si, oui ou non, un animal est passé dans la zone.

2. Système selon la revendication 1, **caractérisé en ce que** le système est équipé d'au moins deux capteurs conçus chacun pour obtenir des informations, à l'aide d'une mesure, quant à une distance entre le capteur respectif et un extérieur d'un animal présent dans la zone, dans lequel les capteurs sont disposés à des emplacements mutuellement différents et dans lequel l'unité de traitement de signaux est conçue pour combiner le traitement des évolutions, dans le temps, des informations obtenues, par capteur, quant à une distance lorsqu'un animal se déplace dans la zone, pour déterminer si, oui ou non, un animal est passé dans la zone.

3. Système selon la revendication 2, **caractérisé en ce que** les capteurs comprennent un premier capteur et un deuxième capteur, le premier capteur étant disposé sur un premier côté de la zone et le deuxième capteur étant disposé sur un deuxième côté de la zone, les premier et deuxième côtés de la zone étant opposés l'un à l'autre, de façon qu'un animal passant dans la zone dans ou opposée à la direction de cheminement passe entre le premier côté et le deuxième côté.

4. Système selon la revendication 3, **caractérisé en ce que** les premier et.r deuxième capteurs sont opposés l'un à l'autre par rapport à la direction de cheminement.

5. Système selon la revendication 3 ou 4, **caractérisé en ce qu'**une direction de la distance entre le premier capteur et le deuxième capteur est au moins pratiquement perpendiculaire à la direction de cheminement.

6. Système selon la revendication 2, **caractérisé en ce que** les capteurs sont séparés l'un de l'autre sur une distance dans la direction de cheminement, l'unité de traitement de signaux étant conçue pour déterminer, d'après les évolutions, dans le temps, des informations obtenues, par capteur, sur une distance lorsqu'un animal se déplace dans la zone, si, oui ou non, un animal est passé dans la zone, et pour déterminer si, oui ou non, l'animal est passé dans la zone dans la direction de cheminement ou dans une direction opposée à la direction de cheminement.

7. Système selon l'une quelconque des revendications précédentes, **caractérisé en ce que** le système est équipé d'au moins trois capteurs.

8. Système selon les revendications 3 et 7, **caractérisé en ce que** les capteurs comprennent un troisième capteur, le troisième capteur étant disposé sur le premier côté de la zone, tandis que le premier et le troisième capteurs sont séparés l'un de l'autre d'une distance dans la direction de cheminement.

9. Système selon la revendication 8, **caractérisé en ce que** l'unité de traitement de signaux est conçue pour déterminer, d'après les évolutions, dans le temps, des informations obtenues, par capteur, quant à une distance, si, oui ou non, un animal est passé dans la zone et si, oui ou non, l'animal est passé dans la zone dans la direction de cheminement ou est passé dans la zone dans la direction opposée à la direction de cheminement.

10. Système selon l'une quelconque des revendications précédentes, **caractérisé en ce que** le système est équipé d'au moins quatre capteurs.

11. Système selon les revendications 8 et 10, **caractérisé en ce que** les capteurs comprennent un troisième et un quatrième capteurs, le troisième capteur étant disposé sur le premier côté de la zone et le quatrième capteur étant disposé sur le deuxième côté de la zone, les premier et troisième capteurs et les deuxième et quatrième capteurs étant séparés les uns des autres d'une distance dans la direction de cheminement.

12. Système selon la revendication 11, **caractérisé en ce que** les premier et deuxième capteurs sont opposés l'un à l'autre par rapport à la direction de cheminement et **en ce que** les troisième et quatrième capteurs sont opposés l'un à l'autre par rapport à la direction de cheminement.

13. Système selon la revendication 12, **caractérisé en ce qu'**une direction de la distance entre les premier et deuxième capteurs et une direction de la distance entre les troisième et quatrième capteurs sont chacune au moins pratiquement perpendiculaire à la direction de cheminement.

14. Système selon la revendication 11, 12 ou 13, **caractérisé en ce que** l'unité de traitement de signaux est conçue pour déterminer, d'après les évolutions, dans le temps, des informations obtenues, par capteur, quant à une distance, si, oui ou non, un animal est passé dans la zone et pour déterminer si, oui ou non, l'animal est passé dans la zone dans la direction de cheminement ou est passé dans la zone dans la direction opposée à la direction de cheminement.

15. Système selon l'une quelconque des revendications précédentes, **caractérisé en ce qu'**au moins une partie des capteurs sont des capteurs à ultrasons destinés à émettre des ultrasons et à recevoir des ultrasons émis par réflexion sur l'animal.

16. Système selon la revendication 15, **caractérisé en ce que** le système est conçu pour émettre des ultrasons pulsés à l'aide des capteurs à ultrasons.

17. Système selon l'une quelconque des revendications précédentes, **caractérisé en ce qu'**au moins une partie des capteurs sont des capteurs laser pour émettre des signaux laser et recevoir des signaux laser émis par réflexion sur l'animal.

18. Système selon la revendication 17, **caractérisé en ce que** le système est conçu pour émettre des signaux laser pulsés à l'aide des capteurs laser.

19. Système selon l'une quelconque des revendications précédentes, **caractérisé en ce que** le système est en outre équipé de moyens d'identification pour identifier un animal présent dans la zone.

20. Système selon la revendication 19, **caractérisé en ce que** les moyens d'identification sont conçus pour lire une étiquette d'identification portée par un animal.

21. Système selon la revendication 19 ou 20, **caractérisé en ce que** les moyens d'identification sont connectés à l'unité de traitement de signaux pour fournir à l'unité de traitement de signaux des informations quant à un animal identifié.

22. Système selon la revendication 21, **caractérisé en ce que** l'unité de traitement de signaux est conçue pour détecter le fait qu'un animal est passé dans la zone dans la direction de cheminement sans que l'animal n'ait été identifié et/ou **en ce que** l'unité de traitement de signaux est conçue pour détecter le fait qu'un animal est passé dans la zone dans la direction opposée à la direction de cheminement sans que l'animal n'ait été identifié.

23. Système selon la revendication 22, **caractérisé en ce que** le système est conçu pour déclencher une alerte lorsque l'unité de traitement de signaux détecte le fait qu'un animal est passé dans la zone dans la direction de cheminement sans que l'animal n'ait été identifié et/ou lorsque l'unité de traitement de signaux a détecté le fait qu'un animal est passé dans la zone dans la direction opposée à la direction de cheminement sans que l'animal n'ait été identifié.

24. Système selon l'une quelconque des revendications précédentes, **caractérisé en ce que** l'unité de traitement de signaux est conçue pour compter le nombre d'animaux qui sont passés dans la zone dans la direction de cheminement et/ou **en ce que** l'unité de traitement de signaux est conçue pour compter le nombre d'animaux étant passés dans la zone dans une direction opposée à la direction de cheminement.

25. Système selon l'une quelconque des revendications précédentes, **caractérisé en ce que** l'unité de traitement de signaux est conçue pour détecter le fait qu'un animal est au moins partiellement dans la zone dans la direction de cheminement, puis qu'il est revenu dans une direction opposée à la direction de cheminement et qu'il a de nouveau quitté la zone.

26. Système selon la revendication 1, **caractérisé en ce que** le/les capteur(s) mesure(nt) des informations quant à la distance dans une direction qui est au moins pratiquement perpendiculaire à la direction de cheminement.

27. Système selon l'une quelconque des revendications précédentes, **caractérisé en ce que** chaque capteur parmi les dix capteurs mesure les informations quant à la distance dans une direction qui est au moins pratiquement perpendiculaire à la direction de cheminement.

28. Salle de traite pour animaux laitiers, pourvue d'un passage avec une entrée et un certain nombre de postes de traite dans lesquels les animaux peuvent entrer en empruntant le passage, la salle de traite étant équipée d'un système selon l'une quelconque des revendications précédentes.

29. Salle de traite selon la revendication 28, **caractérisée en ce que**, dans le passage, une pluralité d'entrées donnant sur des postes de traite est présente, les entrées étant séparées les unes des autres dans une direction longitudinale du passage, et chaque entrée donnant accès à l'un des postes de traite.
